# EUROPEAN PATENT SPECIFICATION

(11) **EP 3 130 463 B1**
(45) Date of publication and mention of the grant of the patent: **15.05.2019**
(21) Application number: 15777451.4
(22) Date of filing: 11.02.2015
(51) Int. Cl.: C08J 7/04, B32B 27/36, C08L 67/02

(54) **MULTI-LAYER POLYESTER SHEET AND MOLDED PRODUCT THEREOF**
MEHRSCHICHTIGE POLYESTERFOLIE UND FORMKÖRPER DARAUS
FEUILLE POLYESTER MULTICOUCHE ET SON PRODUIT MOULÉ

(30) Priority: 11.04.2014 KR 20140043788
(43) Date of publication of application: 15.02.2017
(73) Proprietor: SK Chemicals Co., Ltd., Gyeonggi-do 13494 (KR)
(72) Inventor: LIM, Seol-Hee, Seoul 137-771 (KR); KIM, Sung-Gi, Yongin-si Gyeonggi-do 448-514 (KR)
(74) Representative: Modiano, Micaela Nadia
(86) International application number: PCT/KR2015/001385
(87) International publication number: WO 2015/156489

(56) References cited:
- WO-A1-2013/183873
- JP-A- 2013 072 082
- JP-A- 2013 202 939
- JP-A- 2013 202 940
- KR-A- 20110 028 696
- KR-A- 20110 075 486
- KR-A- 20120 110 477
- US-A1- 2003 204 029
- US-A1- 2014 018 484

## Description

### [Technical Field]

The present invention relates to a multilayer polyester sheet and a molded product made of the same.

More specifically, the present invention relates to a multilayer polyester sheet exhibiting good physical properties such as thermal resistance, chemical resistance, impact resistance, and the like, and having an excellent appearance characteristic, and a molded product made of the same, wherein the multilayer polyester sheet and the molded product made of the same may be used for a packaging case, a thermal molding product, of various products including food.

### [Background Art]

In general, in a packaging sheet for packaging cosmetics, foods, various characteristics such as thermal resistance which is sufficient to withstand heat generated in a process of charging or transporting contents, chemical resistance in which a crack or deformation does not occur even in a case where a printing ink, an adhesive, a detergent, or contents are attached, impact resistance which maintains sheet appearance against external impact, secondary processability such as printability and moldability are required.

As the packaging sheet, a multilayer sheet including two or more polymer resin sheets has been used, and in particular, a multilayer sheet including a polyester resin sheet capable of being manufactured at a low price and having physical properties that are appropriate for a packaging sheet has been widely used.

However, the multilayer polyester sheet including polyester resins known in the art does not sufficiently secure thermal resistance, chemical resistance, and impact resistance over an optimum level, such that there is a limitation in that a shape and a structure thereof are deformed by a heat source or chemical substances, or by external impact or pressure.

Therefore, development of the multilayer polyester sheet capable of sufficiently securing characteristics such as thermal resistance, chemical resistance, and impact resistance as a packaging material is demanded.

JP 2013 202939 and JP 2013 202940 relate a multilayered polyester sheet which has a base layer including polyester resin and a coating layer provided on at least one surface of the base layer and including a polyester resin. The polyester resin of the coating layer is a polyester resin obtained by making a diol component which contains 1,4-cyclohexanedimethanol and isosorbide react with a dicarboxylic acid component, 10-50 mol% of the isosorbide being contained for the whole diol component.

### [Summary of the Invention]

### [Technical Problem]

The present invention has been made in an effort to provide a multilayer polyester sheet exhibiting good physical properties such as thermal resistance, chemical resistance, impact resistance, and the like, and having an excellent appearance characteristic.

In addition, the present invention has been made in an effort to provide a molded product including the multilayer polyester sheet.

### [Solution to Problem]

An exemplary embodiment of the present invention provides a multilayer polyester sheet, including: a substrate layer including a thermoplastic resin; and a coating layer formed on at least one surface of the substrate layer and contains a polyester resin including a residue of a diol component including 51 mol% to 85 mol% of Isosorbide and a residue of a dicarboxylic acid component.

Another exemplary embodiment of the present invention provides a molded product manufactured by using the multilayer polyester sheet.

Hereinafter, a multilayer polyester sheet and a molded product made of the same according to a specific exemplary embodiment of the present invention are described in detail.

In the present specification, a 'residue' means a predetermined moiety or unit included in a product of a chemical reaction when a specific compound participates in the chemical reaction and derived from the specific compound.

For example, the 'residue' of the dicarboxylic acid component and the 'residue' of the diol component mean a moiety derived from the dicarboxylic acid component and a moiety derived from the diol component in polyester formed by an esterification reaction or a polycondensation reaction, respectively.

According to an exemplary embodiment of the present invention, the multilayer polyester sheet is provided, comprising: a substrate layer including a thermoplastic resin; and a coating layer formed on at least one surface of the substrate layer and contains a polyester resin including a residue of a diol component including 51 mol% to 85 mol% of isosorbide and a residue of a dicarboxylic acid component.

The present inventors conducted research into synthesis of a multilayer polyester sheet having more improved physical properties, found through experiments that when a polyester resin prepared by using the diol component including 1,4-cyclohexane dimethanol and 51 mol% to 85 mol%, preferably, 52 mol% to 70 mol% of isosorbide is applied to the coating layer, the multilayer polyester sheet exhibiting good physical properties such as thermal resistance, chemical resistance, impact resistance, and having an excellent appearance characteristic may be provided, and completed the present invention.

The coating layer contains the polyester resin including the residue of the diol component including 51 mol% to 85 mol% of isosorbide and the residue of the dicarboxylic acid component to exhibit good thermal resistance, chemical resistance, and physical properties required according to usages may be more easily implemented by controlling compositions of the polyester resin in the above-described range, or by controlling thickness of the coating layer and/or the multilayer polyester sheet according to an exemplary embodiment.

When a content of isosorbide in the diol component of the polyester resin contained in the coating layer is less than 51 mol%, a glass-rubber transition temperature of the polyester resin contained in the coating layer may be decreased, or a deformation temperature in an oven test B type of the multilayer polyester sheet may be decreased to be 80 °C or less, that is, thermal resistance of the multilayer polyester sheet may not be sufficiently secured.

In addition, when a content of isosorbide in the diol component of the polyester resin contained in the coating layer is less than 51 mol%, the multilayer polyester sheet of an exemplary embodiment may be more easily deformed or denaturalized by an organic solvent or an organic compound, that is, sufficient chemical resistance may not be secured, and sufficient resistance or durability against impact applied to the coating layer and the polyester resin contained in the coating layer at a low temperature may not be provided, such that the multilayer polyester sheet of an exemplary embodiment may not secure sufficient impact resistance or sufficient impact resistance at a low temperature.

Meanwhile, when a content of isosorbide in the diol component of the polyester resin contained in the coating layer is more than 85 mol%, a molecular structure of the polyester resin contained in the coating layer is not densely formed, such that mechanical-physical properties such as impact resistance, wear resistance of the polyester resin contained in the coating layer, the coating layer, or the multilayer polyester sheet according to an exemplary embodiment may be deteriorated.

Meanwhile, the thermoplastic resin included in the substrate layer may comprise the polyester resin.

Examples of the polyester resin may comprise polyethylene terephthalate obtained by polycondensation of terephthalic acid and ethylene glycol, a PET-based copolymer polyester resin in which a moiety of the terephthalic acid is changed with or added to other dicarboxylic acids or a moiety of ethylene glycol is changed with or added to other diols, but the present invention is not particularly limited thereto.

Examples of other diols used in synthesis of the thermoplastic resin in the substrate layer may comprise neopentyl glycol, 1,4-cyclohexane dimethanol, propylene glycol, tetramethylene glycol. The thermoplastic resin included in the substrate layer may further comprise a recycled resin.

The recycled resin may be obtained by recycling the multilayer polyester sheet or a molded product manufactured by using the multilayer polyester sheet.

For example, the recycled resin may be prepared by crushing or pulverizing the multilayer polyester sheet or the molded product manufactured by using the multilayer polyester sheet and drying the multilayer polyester sheet or the molded product manufactured by using the multilayer polyester sheet.

More specifically, the multilayer polyester sheet or the molded product manufactured by using the multilayer polyester sheet may be crushed or pulverized and then hot-air dried or dehumidification dried at 60°C to 100°C to remove impurities, and pulverized materials may be mixed with other resins, followed by melt-extrusion and copolymerization.

Kinds of the other resins and whether or not the other resins are recycled are not specifically limited, and any generally used polymer resin such as the thermoplastic resin is usable.

Specifically, the substrate layer may comprise the recycled resin in a content of 1 wt% to 70 wt%, or 10 wt% to 60 wt%, or 30 wt% to 50 wt% based on total content of the polyester resin included in the substrate layer.

The substrate layer comprises 1 wt% to 70 wt% of the recycled resin, such that a deformation temperature by the oven test B type may be increased by at least 1°C or more, that is, thermal resistance of the multilayer polyester sheet may be improved.

When a content of the recycled resin included in the substrate layer is less than 1 wt%, a degree of the above-described improvement in thermal resistance may not be high.

In addition, when a content of the recycled resin included in the substrate layer is more than 70 wt%, since a content of other components, impurities included in the recycled resin is increased, appearance characteristics such as transparency, color of the substrate layer may be deteriorated, and therefore physical properties and appearance characteristics of the multilayer polyester sheet may also be deteriorated. The intrinsic viscosity of the thermoplastic resin included in the substrate layer is not particularly limited, but it is preferred that the intrinsic viscosity has a range of 0.40 dl/g to 1.20 dl/g.

When the intrinsic viscosity of the thermoplastic resin included in the substrate layer is less than 0.40 dl/g, appearance defects with respect to flow during the extrusion may occur.

Meanwhile, when the intrinsic viscosity of the thermoplastic resin included in the substrate layer is more than 1.20 dl/g, pressure of an extruder may be increased due to an increase in viscosity of a molten material at the time of manufacturing the multilayer polyester sheet, such that a film forming process may not be smoothly performed, and when the temperature of the extruder is increased in order to overcome the increase in pressure, physical properties may be deteriorated due to deformation by heat.

In addition, the thermoplastic resin included in the substrate layer may have a weight average molecular weight of 5000 to 500,000, preferably, 10,000 to 350,000.

When the weight average molecular weight of the thermoplastic resin included in the substrate layer is less than 5000, mechanical-physical properties, for example impact resistance, wear resistance of the thermoplastic resin may be deteriorated.

Meanwhile, when a weight average molecular weight of the thermoplastic resin included in the substrate layer is more than 500,000, as a melting point of the thermoplastic resin is increased, processability may be deteriorated, and viscosity may be increased, such that at the time of manufacturing the multilayer polyester sheet, a pressure of the extruder may be increased, and therefore the film forming process may not be smoothly performed.

A method of preparing the thermoplastic resin included in the substrate layer is not specifically limited.

The dicarboxylic acid component used in synthesis of the polyester resin contained in the coating layer may comprise an aromatic dicarboxylic acid component, and preferably, terephthalic acid.

The dicarboxylic acid component may comprise dicarboxylic acids such as terephthalic acid and the like, alkyl esters thereof (C1 to C4 lower alkyl esters such as monomethyl, monoethyl, dimethyl, diethyl, dibutyl ester, and the like) and/or acid anhydrides thereof, and may react with the diol component to form dicarboxylic acid moieties such as a terephthaloyl moiety.

The dicarboxylic acid moiety used in synthesis of the polyester resin contained in the coating layer comprises terephthalic acid such that physical properties such as thermal resistance, chemical resistance, weather resistance (for example, prevention of a decrease in molecular weight or a yellowing phenomenon by UV) of the polyester resin contained in the coating layer may be improved.

In addition, the diol component used in synthesis of the polyester resin contained in the coating layer may comprise 51 mol% to 85 mol% of isosorbide; and a residual amount of an aliphatic diol component.

A preparation method for synthesizing the polyester resin contained in the coating layer so as to meet the content of isosorbide is not particularly limited, but for example, the polyester resin including isosorbide so as to satisfy the content may be prepared or the polyester resin may be prepared by mixing various polyester resins including isosorbide in various contents.

In addition, the diol component used in synthesis of the polyester resin contained in the coating layer may further comprise a residual amount of aliphatic diol component in addition to isosorbide.

The 'aliphatic diol component' means a diol component except for isosorbide, and may comprise a C2 to C20 aliphatic diol compound, and preferably, a C2 to C12 aliphatic diol compound.

Specific examples of the aliphatic diol compound may comprise linear, branched or cyclic aliphatic diol components such as 4-(hydroxymethyl)cyclohexane carboxylic acid, 4,4-(oxybis(methylene)bis)cyclohexane methanol, diethylene glycol, ethylene glycol, propanediol(1,2-propanediol, 1,3-propanediol, and the like), 1,4-butanediol, 2,2-dimethyl-1,3-propanediol, 1,6-hexanediol, 1,2-cyclohexanediol, 1,2-cyclohexane dimethanol, 1,3-cyclohexane dimethanol, 1,4-cyclohexane dimethanol, and the like, but the present invention is not limited thereto.

Meanwhile, the polyester resin contained in the coating layer has a glass-rubber transition temperature of 120°C to 165°C.

The glass-rubber transition temperature of the polyester resin contained in the coating layer may be confirmed by DSC measurement data and for example, the glass-rubber transition temperature may be confirmed by maintaining the polyester resin contained in the coating layer at 300°C for 5 minutes, slowly cooling the polyester resin to room temperature, and scanning the polyester resin at a rising temperature rate of 10 °C /min.

When the glass-rubber transition temperature of the polyester resin contained in the coating layer is less than 120°C, the multilayer polyester sheet may be deformed by an external heat source generated in a process of charging or transferring contents.

Meanwhile, when the glass-rubber transition temperature of the polyester resin contained in the coating layer is more than 165°C, a large amount of thermal energy may be required for a molding process of the multilayer polyester sheet.

The deformation temperature by an oven test B type of the multilayer polyester sheet may be 90°C or more.

The oven test B type is a method of measuring the deformation temperature at which deformation of appearance starts by putting a sample having a predetermined standard manufactured by using the multilayer polyester sheet into an oven and slowly increasing the temperature.

When the deformation temperature by oven test B type is less than 90°C, the multilayer polyester sheet may be deformed by heat generated in a process of charging or transporting contents.

The multilayer polyester sheet may comprise at least one substrate layer and at least one coating layer.

As described above, the coating layer may be formed on at least one surface of the substrate layer, and the multilayer polyester sheet may comprise at least one substrate layer.

For example, the multilayer polyester sheet may comprise one substrate layer and the coating layer formed on one surface or both surfaces of the substrate layer, and may comprise two or more substrate layers and the coating layer positioned between neighboring substrate layers in the substrate layers.

A thickness ratio of the coating layer to the substrate layer of the multilayer polyester sheet may be 5% to 75%, or 10% to 50%, or 20% to 30%.

The multilayer polyester sheet may have a total thickness of 30 µm to 5500 µm, and a thickness of the coating layer may be changed at a ratio of 1% to 50% based on a thickness of the multilayer polyester sheet.

When the coating layers are formed on both surfaces of the substrate layer, the thickness ratio of the coating layer may be calculated with a sum of the coating layers on both surfaces.

In addition, when there are two or more substrate layers and the coating layer positioned between the neighboring substrate layers in the substrate layers, a thickness ratio of the coating layer to the substrate layer may be calculated with a sum of all thicknesses of substrate layers and a sum of all thicknesses of coating layers.

The thicknesses of the substrate layer and the coating layer may be determined depending on physical properties or usages of the multilayer polyester sheet, and for example, the substrate layer may have a thickness of 20 µm to 3000 µm, and the coating layer may have a thickness of 10 µm to 2500 µm.

When the coating layers are formed on both surfaces of the substrate layer, the thickness of each coating layer may be the same as or different from each other, and a thickness of the coating layer per layer is preferably 10 µm to 500 µm.

The polyester resin contained in the coating layer has an intrinsic viscosity of 0.40 dl/g to 0.60 dl/g.

When the intrinsic viscosity of the polyester resin contained in the coating layer is less than 0.40 dl/g, appearance defects with respect to flow during the extrusion may occur.

When the intrinsic viscosity of the polyester resin contained in the coating layer is more than 0.60 dl/g, pressure of an extruder may be increased due to an increase in viscosity of a molten material at the time of manufacturing the multilayer polyester sheet such that a film forming process may not be smoothly performed, and when the temperature of the extruder is increased in order to overcome the increase in pressure, physical properties may be deteriorated due to deformation by heat.

In the multilayer polyester sheet, the polyester resin contained in the coating layer may comprise a polyester resin containing 1 ppm to 300 ppm, preferably 2 ppm to 250 ppm of a polycondensation catalyst, 10 ppm to 300ppm, preferably 20ppm to 200ppm of a phosphorus stabilizer, or 1 ppm to 100 ppm of a cobalt-based coloring agent, based on a central metal atom.

The polycondensation catalyst may be used in a process of synthesis of the polyester resin contained in the coating layer, and examples of the polycondensation catalyst may comprise a titanium-based compound, a tin-based compound, a germanium-based compound, an antimony-based compound, mixtures thereof, and the like, but the present invention is not particularly limited thereto.

When an amount of the central metal atom is less than 1 ppm, a desirable degree of polymerization may not be achieved, and when an amount thereof is more than 300 ppm, a color of a final polymer may be changed or a side reaction may be accelerated.

Examples of the titanium-based compound may comprise tetraethyl titanate, acetyl tripropyl titanate, tetrapropyl titanate, tetrabutyl titanate, polybutyl titanate, 2-ethylhexyl titanate, octylene glycol titanate, lactate titanate, triethanolamine titanate, acetylacetonate titanate, ethyl acetoacetic ester titanate, isostearyl titanate, titanium dioxide, a titanium dioxide/silicon dioxide copolymer, a titanium dioxide/zirconium dioxide copolymer.

Examples of the tin-based compound may comprise diaryl tin dihalide, dialkyl tin dihalide, diaryl tin oxide, a tetraaryl tin compound, tin alkoxide, an alkyl tin salt, an alkyl tin compound, a mixed alkyl aryl tin.

Examples of the germanium-based compound may comprise germanium dioxide (GeO₂), germanium tetrachloride (GeCl₄), germanium ethyleneglycoxide, germanium acetate, copolymers thereof, and mixtures thereof.

Preferably, germanium dioxide may be used, crystalline or amorphous germanium dioxide may be used, and soluble glycol may also be used.

Examples of the antimony-based compound may comprise antimony oxide, antimony triacetate, a copolymer thereof, and mixtures thereof.

In addition, the phosphorus stabilizer may be used in a process of synthesis of the polyester resin contained in the coating layer, and examples of the phosphorus stabilizer may comprise a phosphorous acid, a phosphoric acid, trimethyl phosphate, triethyl phosphate, triphenyl phosphate, triethyl phosphono acetate but the present invention is not particularly limited thereto.

When an added amount of the phosphorus stabilizer is less than 1 ppm, a desirable bright color may not be obtained, and when the added amount thereof is more than 100 ppm, a high degree of polymerization which is desirable may not be achieved.

In addition, the cobalt-based coloring agent may be used in a process of synthesis of the polyester resin contained in the coating layer, and specific examples of the cobalt-based coloring agent may comprise cobalt acetate, cobalt propionate, and the like, but the present invention is not particularly limited thereto.

In addition to the above-described coloring agents, organic compounds known in the art may be used as the coloring agent.

The coating layer or the substrate layer may further comprise an additive selected from the group consisting of sunscreens, antioxidants, lubricants, antistatic agents, impact modifiers, and fine particles or two or more kinds of mixtures thereof.

A method of adding additives is not particularly limited, but for example, a method of adding the additives during a polymerization reaction, or a method of manufacturing a master batch including A high concentration of additives, followed by dilution and mixing processes may be used.

A method and an apparatus which are usable in manufacture of the multilayer polyester sheet are not particularly limited, but for example, the multilayer polyester sheet may be manufactured by forming the substrate layers and the coating layers and stacking or combining each substrate layer and coating layer, or by forming and stacking the substrate layers and the coating layers at the same time.

More specifically, the multilayer polyester sheet may be manufactured by a method of melting each of coating layers and substrate layers with different extruders, followed by melting and stacking by using a multilayer die, to manufacture a multilayer sheet, a method of melting and pushing each layer by different extruders and melt-adhering the layers to be a roll, a method of performing a heat seal process immediately after pushing coating layers which are pre-molded as a sheet by a T-die of a substrate layer sheet extruder. According to another exemplary embodiment of the present invention, a molded product including the multilayer polyester sheet as described above is provided.

As described above, the multilayer polyester sheet according to an exemplary embodiment may exhibit good physical properties such as thermal resistance, chemical resistance, impact resistance, and the like, and have excellent appearance characteristics. In addition, according to the multilayer polyester sheet, physical properties required according to usages may be more easily controlled.

Accordingly, the multilayer polyester sheet may be variously applied to fields of packaging cases of various products including food, a thermal molding work piece,

The molded product may be obtained by performing various molding processes, for example, molding processes such as injection, extrusion, extrusion blowing, injection blowing and profile extrusion, and post-processing such as a thermal molding process using the same to mold the multilayer polyester sheet according to application usages.

Specific shapes and sizes of the molded product may be determined according to the application usage. For example, the molded product may have a shape of a sheet, a container. The sheet-shaped molded product may have an area of 10 to 1000cm², the container-shaped molded product may have a volume of 100 to 5000cm³, and both of the sheet-shaped and container-shaped molded products may have a thickness of 0.01 to 0.4mm.

The molded product manufactured by using the multilayer polyester sheet may comprise the above description according to an exemplary embodiment.

### [Advantageous Effects of Invention]

According to the present invention, a multilayer polyester sheet capable of exhibiting good physical properties such as thermal resistance, chemical resistance, impact resistance, and the like, having an excellent appearance characteristic, and more easily controlling physical properties required according to usages, and a molded product obtained from the multilayer polyester sheet, are provided.

### [Description of Embodiments]

The present invention will be described in more detail in the following examples.

The following examples are for merely exemplifying the present invention, and therefore the scope of the present invention is not limited to the following examples.

### <Examples 1 to 5: Manufacture of Multilayer Polyester Sheet>

### (1) Synthesis of polyester resin contained in coating layer

Terephthalic acid, 1,4-cyclohexane dimethanol, and ethylene glycol were added to a 7L volume reactor at a molar ratio of 1:0.3:0.3, and isosorbide was added thereto and mixed so as to satisfy contents shown in Table 1 below with respect to total diols, followed by esterification reaction under conditions of a pressure of 0.5 kg/cm² and 270 °C.

From a time when 60% or more of the esterification reaction is processed, 150 ppm of a triethylphosphate stabilizer (based on the center element) was added thereto, and when the esterification reaction was completed and about 80% of water which is by-product was discharged out of the system, 30 ppm of a tin catalyst (based on the center element) with respect to weight of all reaction materials, followed by reaction under conditions of 0.5 mmHg of vacuum and 275 °C (polycondensation reaction).

In addition, when a desirable intrinsic viscosity (IV) was achieved, the reaction was allowed to be completed, and each polyester resin was obtained.

### (2) Manufacture of Multilayer Polyester Sheet

Each multilayer polyester sheet was manufactured by melting coating layers consisting of the polyester resin obtained by the esterification reaction and the polycondensation reaction and substrate layers consisting of other various polyester resins at each controlled melting temperature by using a multilayer extruder, and stacking the coating layers and the substrate layers by using a multilayer die.

### <Example 6: Manufacture of Multilayer Polyester Sheet>

A multilayer polyester sheet was manufactured by the same method as Example 4 except for comprising a recycled polyester which has the content shown in Table 1 below in the substrate layer and prepared by pulverizing the multilayer polyester sheet or a molded product manufactured by using the multilayer polyester sheet, then dehumidification-drying at about 80 °C to remove impurities, and mixing the pulverized materials with a polyester resin, followed by melt-extrusion and copolymerization.

### <Comparative Examples 1 and 2: Manufacture of Multilayer Polyester Sheet>

### (1) Synthesis of polyester resin contained in coating layer

Each polyester resin was obtained by the same method as in Examples 1 to 5 except for changing a content of isosorbide used in the reaction as shown in Table 2 below.

### (2) Manufacture of Multilayer Polyester Resin Sheet

Each multilayer polyester resin sheet was manufactured by the same method as in Examples 1 to 5 except for using the polyester resins obtained by Comparative Examples 1 and 2 instead of using the polyester resins of Examples 1 to 5.

### <Experimental Example: Measurement of physical properties of polyester resins and multilayer polyester sheets obtained by examples and comparative examples>

Physical properties of the polyester resins contained in the coating layer and the multilayer polyester sheet obtained by the examples and comparative examples were measured by the following methods, and results thereof are shown in Tables 1 and 2 below, respectively.

### 1. Intrinsic Viscosity (IV)

The polyester resin contained in the coating layer was dissolved in 0.12% concentration of ortho-chlorophenol (OCP) at 150 °C, and an intrinsic viscosity was measured in 35 °C of thermostat by a ubbelohde viscometer.

### 2. Thermal Resistance (Tg)

The polyester resin contained in the coating layer was annealed at 300 °C for 5 minutes, cooled to room temperature, and a glass-rubber transition temperature (Tg) of the polyester resin during a second scan at a rising temperature rate of 10 °C /min was measured.

### 3. Oven Test

3-1. A type: Manufacturing a (25cm) x (15 cm) x (5 cm) sample using the multilayer polyester sheet, putting the sample into a JEIO TECH convection oven, maintaining the sample at 90°C for 60 minutes, and confirming whether or not appearance deformation was occurred.

Whether or not appearance deformation occurs was determined by observing a difference in shape between a sample before putting it in an oven and a sample after putting it in an oven with the naked eye.

3-2. B type: Manufacturing a (25cm) x (15cm) x (5cm) sample using the multilayer polyester sheet, putting the sample into a JEIO TECH convection oven, slowly raising the temperature from 40°C, and measuring a 'deformation temperature' at which appearance deformation starts to occur.

Whether or not appearance deformation occurs was determined by observing a difference in shape between a sample before putting it in an oven and a sample after putting it in an oven with the naked eye.

### 4. Cold Resistance Impact Strength

Cold resistance impact strength was determined by storing the multilayer polyester sheet at -20°C for 60 minutes, dropping the multilayer polyester sheet from a height of lm, and confirming whether or not the multilayer polyester sheet was broken.

### 5. Chemical Resistance

### 5-1. 100% Ethanol Solution

The multilayer polyester sheet was immersed in an ethanol solution at 60°C for 30 hours, and whether or not appearance deformation occurs was confirmed.

### 5-2. Sunscreen: Ethylhexyl Methoxycinnamate

Sunscreen was applied to the multilayer polyester sheet, which was then stored in a hot-air oven at 80°C for 8 hours, and whether or not appearance deformation occurs was confirmed.

Compositions of the coating layers and the substrate layers of examples and comparative examples and results of experimental examples are shown in Tables 1 and 2 below.

**[Table 1]**

| Compositions of coating layers and substrate layers of examples and results of experimental examples | | | | | | | |
|---|---|---|---|---|---|---|---|
| Classification | Unit | Ex. 1 | Ex. 2 | Ex. 3 | Ex. 4 | Ex.5 | Ex.6 |
| Content of isosorbide (ISB) | mol% | 52 | 52 | 52 | 60 | 65 | 60 |
| Total Sheet Thickness | mm | 0.4 | | | | | |
| Thickness of Coating Layer | | 0.08 | | | | | |
| Thickness of Substrate Layer | | 0.32 | | | | | |
| Content of Recycled Resin Contained in Substrate Layer | wt% | 0 | 0 | 0 | 0 | 0 | 40 |
| IV of Polyester Resin Contained in Coating Layer | dl/g | 0.45 | 0.55 | 0.6 | 0.6 | 0.5 | 0.6 |
| Tg of Polyester Resin Contained in Coating Layer | °C | 129 | 133 | 137 | 150 | 150 | 153 |
| Oven testA type | Whether or not deformation occurs | No deformation | | | | | |
| Oven test-B type | Deformation Temperature (°C) | 95 | 100 | 105 | 120∼125 | | 127 |
| Cold Resistance Impact Strength (-20°C, 1 hour) | (the number of deformed products out of 10 products) | 4 | 2 | 0 | 0 | 3 | 3 |
| Chemical Resistance (Ethanol 100%) | Whether or not deformation occurs | Fine Haze | No deformation | | | | |
| Chemical Resistance (Sunscreen) | Whether or not deformation occurs | Fine Haze | No deformation | | | | |

As shown in Table 1 above, the glass-rubber transition temperatures of the polyester resins included in the coating layers obtained by examples were increased as the intrinsic viscosities were increased, despite the same content of isosorbide.

On the other hand, the glass-rubber transition temperatures of the polyester resins were increased as the contents of isosorbide were increased, despite the same intrinsic viscosity.

In addition, the multilayer polyester sheets obtained by examples showed no deformation in the oven test A type and each multilayer polyester sheet had a deformation temperature of 90°C or more in the oven test B type, to be capable of implementing excellent thermal resistance as materials of heat-resistant food and packaging containers.

In addition, as the contents of isosorbide and the intrinsic viscosities were increased, the multilayer polyester sheets obtained by examples had excellent cold resistance impact strength and had little deformation due to ethanol and sunscreen to have excellent chemical resistance.

As compared to Example 4 not containing the recycled resin, the substrate layer of Example 6 contained 40 wt% of the recycled resin, such that the deformation temperature in the oven test B type was increased by at least 1°C or more, whereby thermal resistance of the multilayer polyester sheet was improved.

**[Table 2]**

| Compositions of coating layers and substrate layers of comparative examples and results of experimental examples | | | |
|---|---|---|---|
| Classification | Unit | C Ex. 1 | C Ex. 2 |
| Content of isosorbide (ISB) | mol% | 12 | 30 |
| Total Sheet Thickness | mm | 0.4 | |
| Thickness of Coating Layer | | 0.08 | |
| Thickness of Substrate Layer | | 0.32 | |
| Content of Recycled Resin Contained in Substrate Layer | wt% | 0 | 0 |
| IV of Polyester Resin Contained in Coating Layer | dl/g | 0.7 | 0.6 |
| Tg of Polyester Resin Contained in Coating Layer | °C | 94 | 118 |
| Oven testA type | Whether or not deformation occurs | Deformed | Deformed |
| Oven test-B type | Deformation Temperature (°C) | 60 | 75∼80 |
| Cold Resistance Impact Strength (-20°C 1 hour) | (the number of deformed products out of 10 products) | 9 | 5 |
| Chemical Resistance (Ethanol 100%) | Whether or not deformation occurs | Crack | Haze |
| Chemical Resistance (Sunscreen) | Whether or not deformation occurs | Haze | Haze |

As shown in Table 2 above, even through the polyester resins contained in the coating layers obtained by the comparative examples had high intrinsic viscosities, the glass-rubber transition temperatures were decreased to be 120°C or less.

In addition, the multilayer polyester sheets obtained by the comparative examples were modified in the oven test A type, and had a deformation temperature of 80°C or less in the oven test B type, such that it was confirmed that the multilayer polyester sheets obtained by the comparative examples did not have sufficient thermal resistance as materials for heat-resistant food and packaging containers.

Further, five or more products were deformed at -20°C and cracks and haze occurred due to ethanol and sunscreen, such that it was confirmed that cold resistance impact strength and chemical resistance were also not sufficient.

## Claims

1. A multilayer polyester sheet, comprising:
a substrate layer including a thermoplastic resin; and
a coating layer formed on at least one surface of the substrate layer and containing a polyester resin consisting of a residue of a diol component including 51 mol% to 85 mol% of isosorbide and a residue of a dicarboxylic acid component,
wherein the polyester resin contained in the coating layer has a glass-rubber transition temperature of 120°C to 165°C,
wherein a deformation temperature by oven test B type is 90°C or more,
wherein the thermoplastic resin included in the substrate layer comprises a polyester resin, wherein the intrinsic viscosity of the thermoplastic resin included in the substrate is in the range of 0.40 dl/g to 1.20 dl/g, wherein the polyester resin contained in the coating layer has an intrinsic viscosity of 0.40 dl/g to 0.60 dl/g

2. The multilayer polyester sheet of claim 1,
wherein the substrate layer further comprises a recycled resin.

3. The multilayer polyester sheet of claim 2,
wherein the substrate layer comprises 1 wt% to 70 wt% of the recycled resin.

4. The multilayer polyester sheet of claim 1,
wherein the diol component included in the polyester resin contained in the coating layer comprises 51 mol% to 85 mol% of isosorbide; and a residual amount of an aliphatic diol component.

5. The multilayer polyester sheet of claim 1,
wherein the dicarboxylic acid component included in the polyester resin contained in the coating layer comprises an aromatic dicarboxylic acid component.

6. The multilayer polyester sheet of claim 1,
wherein the multilayer polyester sheet comprises at least one substrate layer and at least one coating layer.

7. The multilayer polyester sheet of claim 1,
wherein a thickness ratio between the substrate layer and the coating layer is 5% to 75%.

8. The multilayer polyester sheet of claim 1,
wherein the polyester resin contained in the coating layer comprises a polyester resin containing 1 ppm to 500 ppm of a polycondensation catalyst, 10 ppm to 300 ppm of a phosphorus stabilizer or 1 ppm to 100 ppm of a cobalt-based coloring agent, based on a central metal atom.

9. The multilayer polyester sheet of claim 1,
wherein the coating layer or the substrate layer further comprises at least one additive selected from the group consisting of sunscreens, antioxidants, lubricants, antistatic agents, impact modifiers, organic colorants, and fine particles.

10. A molded product comprising the multilayer polyester sheet of claim 1.

## Patentansprüche

1. Eine mehrschichtige Polyesterfolie, die Folgendes umfasst:
eine Substratschicht einschließlich einem thermoplastischen Harz; und
eine Deckschicht gebildet auf mindestens einer Oberfläche der Substratschicht und enthaltend ein Polyesterharz bestehend aus einem Rest einer Diolkomponente einschließlich 51 Mol% bis 85 Mol% von Isosorbid, und einem Rest einer Dicarbonsäurekomponente, worin das Polyesterharz, das in der Deckschicht enthalten ist, eine Glas-Gummi-Übergangstemperatur von 120°C bis 165°C hat, worin eine Verformungstemperatur durch Ofentest Typ B 90°C oder mehr ist, worin das thermoplastische Harz, das in der Substratschicht eingeschlossen ist, ein Polyesterharz umfasst, worin die intrinsische Viskosität des thermoplastischen Harzes, das in dem Substrat eingeschlossen ist, in dem Bereich von 0,40 dl/g bis 1,20 dl/g liegt,
worin das Polyesterharz, das in der Deckschicht enthalten ist, eine intrinsische Viskosität von 0,40 dl/g bis 0,60 dl/g hat.

2. Die mehrschichtige Polyesterfolie gemäß Anspruch 1, worin die Substratschicht weiter ein recyceltes Harz umfasst.

3. Die mehrschichtige Polyesterfolie gemäß Anspruch 2, worin die Substratschicht 1 Gewichts% bis 70 Gewichts% des recycelten Harzes umfasst.

4. Die mehrschichtige Polyesterfolie gemäß Anspruch 1,
worin die Diolkomponente, die in dem Polyesterharz eingeschlossen ist, das in der Deckschicht enthalten ist, 51 Mol% bis 85 Mol% von Isosorbid umfasst; und eine Restmenge von einer aliphatischen Diolkomponente.

5. Die mehrschichtige Polyesterfolie gemäß Anspruch 1, worin die Dicarbonsäurekomponente, die in dem Polyesterharz eingeschlossen ist, das in der Deckschicht enthalten ist, eine aromatische Dicarbonsäurekomponente umfasst.

6. Die mehrschichtige Polyesterfolie gemäß Anspruch 1, worin die mehrschichtige Polyesterfolie mindestens eine Substratschicht und mindestens eine Deckschicht umfasst.

7. Die mehrschichtige Polyesterfolie gemäß Anspruch 1, worin ein Dickenverhältnis zwischen der Substratschicht und der Deckschicht 5% bis 75% ist.

8. Die mehrschichtige Polyesterfolie gemäß Anspruch 1, worin das Polyesterharz, das in der Deckschicht enthalten ist, ein Polyesterharz enthaltend 1 ppm bis 500 ppm eines Polykondensationskatalysators, 10 ppm bis 300 ppm eines Phosphorstabilisators oder 1 ppm bis 100 ppm eines Cobaltbasierten Farbstoffs, basierend auf einem zentralen Metallatom, umfasst.

9. Die mehrschichtige Polyesterfolie gemäß Anspruch 1, worin die Deckschicht oder die Substratschicht weiter mindestens einen Zusatzstoff gewählt aus der Gruppe bestehend aus Sonnenschutzmitteln, Antioxidantien, Schmiermitteln, antistatischen Wirkstoffen, Schlagfestmodifikatoren, organischen Farbstoffen und Feinpartikeln umfasst.

10. Ein geformtes Produkt umfassend die mehrschichtige Polyesterfolie gemäß Anspruch 1.

## Revendications

1. Feuille multicouche en polyester, qui comprend :
- une couche de substrat incluant une résine thermoplastique,
- et une couche de revêtement, formée sur au moins une surface de la couche de substrat et contenant une résine polyester constituée d'un résidu d'un composant diol incluant de 51 à 85 % en moles d'isosorbide et d'un résidu d'un composant acide dicarboxylique,
dans laquelle la résine polyester contenue dans la couche de revêtement présente une température de transition verre-caoutchouc de 120 à 165 °C,
dont la température de déformation lors d'un test en four de type B est égale ou supérieure à 90 °C,
dans laquelle la résine thermoplastique incluse dans la couche de substrat comprend une résine polyester,
dans laquelle la viscosité intrinsèque de la résine thermoplastique incluse dans le substrat se situe dans l'intervalle allant de 0,40 à 1,20 dL/g,
et dans laquelle la résine polyester contenue dans la couche de revêtement présente une viscosité intrinsèque de 0,40 à 0,60 dL/g.

2. Feuille multicouche en polyester, conforme à la revendication 1, dans laquelle la couche de substrat comprend en outre une résine recyclée.

3. Feuille multicouche en polyester, conforme à la revendication 2, dans laquelle la couche de substrat comprend de 1 à 70 % en poids de la résine recyclée.

4. Feuille multicouche en polyester, conforme à la revendication 1, dans laquelle le composant diol inclus dans la résine polyester contenue dans la couche de revêtement comporte de 51 à 85 % en moles d'isosorbide, le restant étant un composant diol aliphatique.

5. Feuille multicouche en polyester, conforme à la revendication 1, dans laquelle le composant acide dicarboxylique inclus dans la résine polyester contenue dans la couche de revêtement comporte un composant acide dicarboxylique aromatique.

6. Feuille multicouche en polyester, conforme à la revendication 1, laquelle feuille multicouche en polyester comporte au moins une couche de substrat et au moins une couche de revêtement.

7. Feuille multicouche en polyester, conforme à la revendication 1, dans laquelle le rapport entre l'épaisseur de la couche de substrat et celle de la couche de revêtement vaut de 5 % à 75 %.

8. Feuille multicouche en polyester, conforme à la revendication 1, dans laquelle la résine polyester contenue dans la couche de revêtement comprend une résine polyester contenant de 1 à 500 ppm d'un catalyseur de polycondensation, de 10 à 300 ppm d'un stabilisant phosphoré ou de 1 à 100 ppm d'un agent colorant à base de cobalt, teneur calculée pour l'atome de métal central.

9. Feuille multicouche en polyester, conforme à la revendication 1, dans laquelle la couche de revêtement ou la couche de substrat comprend en outre au moins un adjuvant choisi dans l'ensemble formé par les agents d'écrans solaires, antioxydants, lubrifiants, agents antistatiques, agents modifiant la résistance au choc, colorants organiques et particules fines.

10. Produit moulé comportant une feuille multicouche en polyester, conforme à la revendication 1.
